# EUROPÄISCHE PATENTANMELDUNG

(11) **EP 4 707 629 A1**
(43) Veröffentlichungstag der Anmeldung: **11.03.2026**
(21) Anmeldenummer: 25189024.0
(22) Anmeldetag: 11.07.2025
(51) Int. Cl.: F16D 7/00, F16D 7/08, F16D 63/00, F16D 67/02, F16D 23/12, F16D 127/00

(54) **DREHMOMENTBEGRENZER MIT INTEGRIERTER DÄMPFUNGSFUNKTION**

(30) Priorität: 10.09.2024 DE 102024125909
(71) Anmelder: Liebherr-Aerospace Lindenberg GmbH, 88161 Lindenberg (DE)
(72) Erfinder: SCHLEGEL, Konstantin, 88085 Langenargen (DE); GAILE, Anton, 88299 Leutkirch (DE)
(74) Vertreter: Lorenz Seidler Gossel Part. mbB

(57) **Zusammenfassung**

Die vorliegende Erfindung betrifft eine Vorrichtung zur Drehmomentbegrenzung und / oder -übertragung, wobei die Vorrichtung ein Dämpfungselement (6) aufweist, das einteilig ausgeführt ist und das bei Überschreiten des zulässigen Drehmomentes oder beim Schalten einer Bremse eine Mitnahmescheibe (4) des Drehmomentbegrenzers oder der Bremse mit dem Gehäuse oder einem anderen lastaufnehmenden Bauteil der Vorrichtung verbindet.

## Beschreibung

Die vorliegende Erfindung betrifft eine Vorrichtung zur Drehmomentbegrenzung und / oder -übertragung mit integrierter Dämpfungsfunktion.

Drehmomentbegrenzer (auch als Torque Limiter bezeichnet) werden in der Luftfahrtbranche überall dort eingesetzt, wo die Struktur beispielsweise eines Flugzeugs vor mechanischer Überbelastung geschützt werden muss.

Besondere Bedeutung haben Drehmomentbegrenzer beispielsweise an komplexen Hochauftriebssystemen mit einer zentralen Antriebseinheit und weiteren Klappenantrieben an einem Luftfahrzeug.

Bedingt durch die Systemarchitektur beispielsweise der Hochauftriebssysteme ist es hierbei notwendig, die zur Verfügung stehende Antriebsleistung im Falle eines blockierten Abtriebes schadlos in die Flugzeugstruktur umzuleiten.

Drehmomentbegrenzer arbeiten meist rein mechanisch und dienen zur Lastbegrenzung an der Flugzeugstruktur bzw. an der Abtriebskinematik der Stellantriebe (Stations Torque Limiter). Drehmomentbegrenzer schützen beispielsweise die Antriebswellen, Transmissionsgetriebe und weitere Komponenten vor zu hohem Drehmoment (System Torque Limiter). Drehmomentbegrenzer ermöglichen häufig ein geringeres Gewicht der lastseitig nachfolgenden Komponenten, beispielsweise im Aktuator sowie der Flugzeugstruktur

Reibschlüssige, rücksetzbare Drehmomentgrenzer sind bekannt und stellen den überwiegenden Anteil bei der Anwendung in der sekundären Flugsteuerung. Formschlüssige Drehmomentbegrenzer sind ebenfalls bekannt, jedoch mit einem zusätzlichen Dämpfer als separates Bauteil im Drehmomentbegrenzer.

Herkömmliche Lösungen weisen die nachstehenden Nachteile auf:
Ein erster Nachteil ist das Auftreten latenter (schlafender) Fehler der Lastbegrenzungsfunktion: Ein latenter Fehler, ist ein Fehler, der in Kombination mit einem oder mehreren weiteren spezifischen Fehlern oder Ereignissen zu einem unter Umständen gefährlichen oder katastrophalen Fehlerzustand führen kann. Gemäß CS25 muss jede für einen sicheren Flugzeugbetrieb relevante Komponente so ausgeführt sein, dass jeder signifikante latente Fehler so weit wie möglich ausgeschlossen wird.

Ein schlafender Fehler bei einem System- oder Stations-Drehmomentbegrenzer mit Reibscheiben kann zur Überlastung und somit zum Versagen von Systemkomponenten oder zur Beschädigung der Flugzeugstruktur führen.

Ein unentdeckter Verlust der Bremsfähigkeit einer Bremse (WTB / PCU-Bremse), bei der ein solcher Drehmomentbegrenzer zum Einsatz kommt, z.B. verursacht durch mechanischen Verschleiß, kann zu Klappenasymmetrie und/oder unkontrollierter Bewegung der Klappen bei Hochauftriebssystemen und anderen Klappensystemen eines Flugzeuges führen.

Einen zweiten Nachteil stellt das Gewicht / Massenträgheitsmoment dar:
Herkömmliche Drehmomentbegrenzer als reibschlüssige Ausführung beinhalten meist ein Bremsscheibenpaket, welches in der Regel ein höheres Gewicht und somit höhere Massenträgheitsmomente im Antriebsstrang bewirken. Höhere Massenträgheitsmomente im Antriebsstrang führen bei hochdynamischen Fehlerfällen im System, wie z.B. bei einem Klemmfall an einer Station, zu deutlich höheren Fehlerlasten im System.

Ein dritter Nachteil ergibt sich bei der Wartung:
Um beispielsweise einen Bremsleistungsverlust zu entdecken bzw. um latente Fehler zu vermeiden, muss bei bekannten Lösungen ein Drehmomentbegrenzer bzw. eine Bremse in kurzen, regelmäßigen Abständen überprüft werden. Diese Prozedur verursacht in der Regel zusätzliche Wartungskosten für Flugzeugbetreiber.

Der vorliegenden Erfindung liegt vor diesem Hintergrund die Aufgabe zugrunde, die Nachteile des Stands der Technik abzumildern oder gar ganz zu beseitigen.

Insbesondere liegen der vorliegenden Erfindung die nachstehenden spezifischen Aufgaben zugrunde:
Die Erfindung soll vorzugsweise die Drehmomentbegrenzung in einem Luftfahrzeug-Klappenantriebssystem bei reduzierter Bauteilanzahl eines formschlüssigen Drehmomentbegrenzers mit integriertem Lastdämpfungselement ermöglichen.

Die Erfindung soll vorzugsweise die Last für bauraum- und gewichtsoptimierte Gestaltung der Antriebssystem-Komponenten und der Flügelstruktur mindern, sowohl aufgrund reduzierbarer Betriebslasten und Fehlerfalllasten, je nach Anwendung und Anforderung. Dies gilt vorzugsweise für die Anwendung der Erfindung als Drehmomentbegrenzer als auch für Bremsen.

Die Erfindung soll vorzugsweise das Auftreten von signifikanten latenten Fehlern (Forderung aus CS25), wie sie bei einem reibschlüssigen Drehmomentgrenzer oder einer reibschlüssigen Bremse möglich sind, ausschließen.

Die Erfindung soll vorzugsweise die Zuverlässigkeit des Drehmomentbegrenzers oder einer Bremse und somit des Gesamtsystems erhöhen.

Die Erfindung soll vorzugsweise einen Wartungsaufwand an Flugsteuerungskomponenten durch einen Entfall der regelmäßigen Funktionsüberprüfungen, wie sie bei einem herkömmlichen reibschlüssigen Drehmomentgrenzer oder einer herkömmlichen reibschlüssigen Bremse erforderlich sind, reduzieren.

Diese Aufgabe wird durch die Vorrichtung mit den Merkmalen des Anspruchs 1 sowie die weiteren Gegenstände der unabhängigen Ansprüche gelöst. Vorteilhafte Ausführungsformen der Erfindung sind Gegenstand der Unteransprüche.

Danach ist eine Vorrichtung zur Drehmomentbegrenzung und / oder -übertragung vorgesehen, wobei die Funktionen der Drehmomentbegrenzung und / oder - übertragung und der Dämpfung in einem einzigen Bauteil, vorzugsweise einem Dämpfungselement, realisiert sind.

Das Dämpfungselement, welches bei Überschreiten des zulässigen Drehmomentes oder beim Schalten der Bremse eine Mitnahmescheibe des Drehmomentbegrenzers oder der Bremse mit dem Gehäuse oder einem anderen lastaufnehmenden Bauteil verbindet, ist einteilig ausgeführt.

Die Erfindung betrifft des Weiteren eine Vorrichtung zum rotativen Kuppeln zweier Wellen zur Übertragung von Drehmoment, wobei das Dämpfungselement welches bei beim Schalten der Kupplung die Mitnahmescheibe des einen Kupplungsteils mit dem Dämpfungselement des zweiten Kupplungsteils verbindet, einteilig ausgeführt ist.

Die beiden erfindungsgemäßen Ausführungen der Ansprüche 1 und 2 können im Rahmen der Erfindung auch in Kombination miteinander vorliegen.

Durch die Funktionsintegration in einem einzigen Bauteil lässt sich die Anzahl der erforderlichen Bauteile reduzieren. Dies ermöglicht eine kompakte Ausgestaltung und eine Kostenreduktion. Hierbei ist die Geometrie und Ausgestaltung des Dämpfungselements ein wesentlicher Faktor.

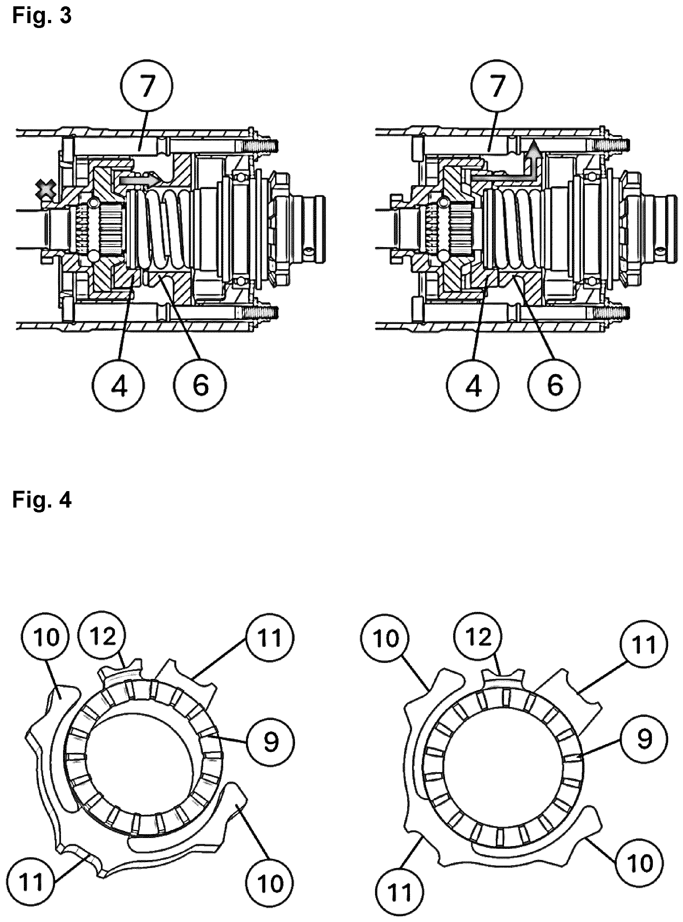

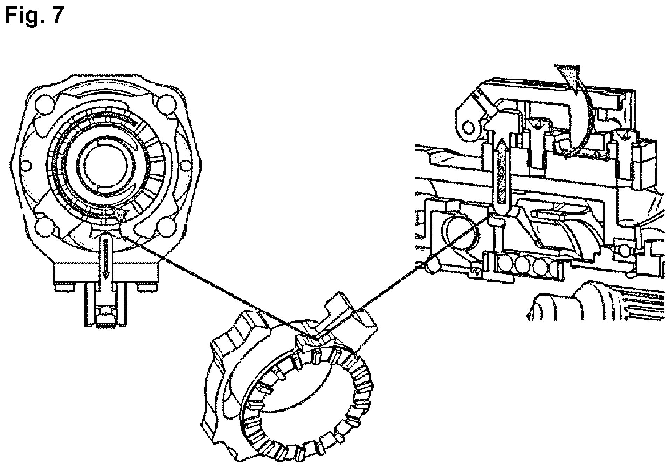

Eine mögliche Ausgestaltung eines erfindungsgemäßen Dämpfungselements ist beispielsweise in den Figuren 4 und 7 gezeigt.

Das Dämpfungselement kann eine Formschluss-Scheibe für ein axiales Einkuppeln aufweisen.

Das Dämpfungselement kann zudem einen Endanschlag aufweisen, welcher eine Bewegung des Dämpfungselements auf einen definierten Rotationswinkel begrenzt. Dies ist beispielhaft in Fig. 4 gezeigt.

Das Dämpfungselement kann weiterhin ein Federelement aufweisen, welches dazu ausgelegt ist, den Endanschlag in dessen unbelastetem Zustand in einer Mittenposition zu halten bzw. vorzuspannen und vorzugsweise gleichzeitig eine Drehbewegung zu dämpfen und / oder eine Zentrierkraft abhängig vom Drehdrehwinkel zu erhöhen.

Das Dämpfungselement kann aus dem Vollen gefräst oder mittels eines additiven Fertigungsverfahrens gefertigt sein.

Das Dämpfungselement kann weiterhin eine Anzeige-Funktionsfläche aufweisen, welche dazu ausgelegt ist, ein Verdrehen des Dämpfungselements anzuzeigen. Die Anzeige-Funktionsfläche kann beispielsweise wie die mit dem Bezugszeichen 12 in den Figuren 4 und 7 bezeichnete Fläche ausgestaltet sein.

Das Dämpfungselement kann dazu ausgelegt sein, im Rahmen einer Kupplung eingesetzt zu werden und beim Einrücken der Kupplungsteile ein sicheres Einrasten der Formschlussteile zu gewährleisten. Hierfür kann das Dämpfungselement Formschlusselemente 9 aufweisen.

Das Dämpfungselement kann einen Statorring aufweisen oder in diesen integriert sein oder aus diesem bestehen. Die Erfindung ist jedoch nicht auf die in den Figuren gezeigten Ausgestaltungen begrenzt.

Weiterhin betrifft die Erfindung ein Verfahren zur Drehmomentbegrenzung und / oder -übertragung, wobei die Schritte des Dämpfens bzw. die Funktion des Dämpfens und der Drehmomentbegrenzung / -übertragung von einem einzigen Bauteil, vorzugsweise einem Statorring, ausgeführt werden.

Zudem betrifft die Erfindung eine Bremse, einen Drehmomentbegrenzer oder eine Kupplung mit einer erfindungsgemäßen Vorrichtung.

Ein anderer Aspekt der vorliegenden Erfindung betrifft eine Verwendung einer Vorrichtung gemäß der vorliegenden Erfindung und / oder eines Verfahrens gemäß der vorliegenden Erfindung zur Steuerung eines Luftfahrzeugs und/oder zur Veränderung des Auftriebsverhaltens eines Luftfahrzeuges, vorzugsweise eines Flugzeugs. Eine bevorzugte Anwendung ist die in einem Hochauftriebssystem eines Flugzeuges.

Ein weiterer Aspekt der vorliegenden Erfindung betrifft eine Verwendung einer Vorrichtung gemäß der vorliegenden Erfindung und / oder eines Verfahrens gemäß der vorliegenden Erfindung in der Fertigung eines Luftfahrzeugs, vorzugsweise eines Flugzeugs.

Ein wieder anderer Aspekt der vorliegenden Erfindung betrifft ein Luftfahrzeug, insbesondere Flugzeug mit einer Bremse, einem Drehmomentbegrenzer und / oder einer Kupplung gemäß der vorliegenden Erfindung.

In anderen Worten lassen sich Merkmale der vorliegenden Erfindung wie folgt beschreiben:
Ein Aspekt der vorliegenden Erfindung sind die Grundfunktionen des Dämpfungselementes einer erfindungsgemäßen Vorrichtung, sowie dessen besondere Geometrie und mechanischen Eigenschaften.

Die spezielle Geometrie des Dämpfungselements (siehe beispielsweise Fig. 4 und Fig. 7) und die Vereinigung mehrerer aufeinander abgestimmten Teilfunktionen (Dämpfung und Synchronisierung, also Drehmomentbegrenzung oder - übertragung) in nur einem Bauteil, ermöglicht eine Teilereduzierung.

Ein Dämpfungselement, welches im Rahmen einer erfindungsgemäßen Vorrichtung zum Einsatz kommt, weist vorzugsweise folgende Funktionen bzw. Elemente auf:
1) mindestens eine Formschluss-Scheibe für ein axiales Einkuppeln,
2) mindestens einen Endanschlag, welcher einen definierten Rotationswinkel zulässt, und
3) mindestens ein Federelement, welches den Endanschlag in unbelastetem Zustand in seiner Mittenposition hält und gleichzeitig die Drehbewegung dämpft, bzw. die Zentrierkraft abhängig vom Drehwinkel erhöht.

Diese Elemente sind vorzugsweise in einem einzigen Bauteil, nämlich dem Dämpfungselement, integriert.

Das Dämpfungselement kann entweder aus dem Vollen gefräst werden, oder durch additive Fertigungsverfahren hergestellt werden.

Das Dämpfungselement kann weiterhin eine weitere Funktionsfläche beinhalten, um eine Anzeige bei Verdrehung zu erhalten bzw. auszugeben.

Das Dämpfungselement kann weiterhin dazu genutzt werden, um beim Einrücken der Kupplungsteile ein sicheres Einrasten der Formschlusselemente zu gewährleisten.

Dieses Prinzip ist universell anwendbar in vielen anderen, zahlreichen geometrischen Variationen und Anwendungen und beschränkt sich nicht nur auf die in den offenbarten Ausführungsbeispielen dargestellten technischen Möglichkeiten.

Die Dämpfungsfunktion bzw. eine erfindungsgemäße Vorrichtung kann bei Bedarf auch in reibschlüssigen Drehmomentbegrenzern und Bremsen zum Einsatz kommen.

Allgemein ausgedrückt, betrifft die vorliegende Erfindung somit ein Bauelement, das eine Funktion zur Drehmomentbegrenzung/-übertragung und eine Funktion zur Dämpfung vorzugsweise in einem einzigen Bauelement integriert.

Die Dämpfung dient insbesondere der Reduzierung von dynamischen Spitzenlasten beim Aktivieren des Formschlusses.

Eine Vorrichtung gemäß der vorliegenden Erfindung kann beispielsweise für die folgenden Anwendungen zum Einsatz kommen:
Für Luftfahrzeuge, im speziellen für Komponenten für Hochauftriebssysteme, Klappen- oder Türantriebe oder auch für elektromechanische Flugsteuerungsaktuatoren.

Insbesondere für bzw. mit folgenden funktionellen Komponenten kann eine erfindungsgemäße Vorrichtung verwendet werden: Torque Limiter / Torque Brake, Schaltbare Kupplungen, Bremse (WTB etc.), Endanschlag, Travel Limiter.

Die spezielle Form eines Statorrings innerhalb eines erfindungsgemäßen Drehmomentbegrenzers, ermöglicht es, dass der Drehmomentbegrenzer einen Formschluss zur Lastableitung zum Gehäuse darstellt und gleichzeitig eine Dämpfungsfunktion aufweist.

Hierfür stellt die in den Fig. 4 und 7 gezeigte Geometrie des Dämpfungselements bzw. Statorrings eine bevorzugte, beispielhafte Ausgestaltung dar.

Vorzugsweise kommt eine erfindungsgemäße Vorrichtung bei Anwendung speziell für Flugsteuerungssysteme zum Einsatz.

Weiterhin wird durch die vorliegende Erfindung im Vergleich zu herkömmlichen Lösungen ein höherer Integrationsgrad mit mehreren Funktionen in einem Bauteil erreicht, um so das Massenträgheitsmoment im System zu reduzieren. Damit reduzieren sich die erforderlichen Drehmomente bei der Beschleunigung und Fehlerlasten für das gesamte Antriebssystem.

Nachstehend werden beispielhafte Vorteil der Erfindung genannt:
Die vorliegende Erfindung ermöglicht eine kompakte Bauweise mit reduzierter Teileanzahl im Vergleich zu konventionellen Drehmomentbegrenzern.

Die vorliegende Erfindung ermöglicht ein einteiliges Design von TL-Formschlussteil und Dämpfungsgeometrie bei einem Statorring einer erfindungsgemäßen Vorrichtung.

Die Geometrie des Dämpfungselements zur Dämpfungsfunktion dient bei einer Aktivierung des Drehmomentbegrenzers zur Minimierung der auftretenden dynamischen Last.

Die Erfindung ermöglicht eine Reduzierung oder Minimierung der auftretenden dynamischen Lasten durch die spezielle Geometrie des Dämpfungselements oder Statorrings und vorzugsweise die aufeinander abgestimmten mehreren Teilfunktionen.

Die Erfindung ermöglicht eine Reduzierung der Belastung der Systemkomponenten- und Flugzeugstruktur durch eine kompakte Bauweise mit reduzierter Teileanzahl im Vergleich zu konventionellen Drehmomentbegrenzern.

Ermöglicht eine Lastminderung für eine bauraum- und gewichtsoptimierte Gestaltung der Komponenten, sowohl bei Betriebslasten als auch bei Fehlerfalllasten, je nach Anwendung und Anforderung.

Die Erfindung ermöglicht den Ausschluss oder die Reduktion von latenten Fehlern.

Die Erfindung ermöglicht eine Erhöhung der Zuverlässigkeit der Flugsteuerungskomponenten und Flugsteuerungssysteme.

Die Erfindung ermöglicht eine Reduzierung des Testaufwandes an Flugsteuerungskomponenten durch einen Entfall der regelmäßigen Funktionsüberprüfungen, wie sie bei einem herkömmlichen, reibschlüssigen Drehmomentgrenzer oder einer herkömmlichen, reibschlüssigen Bremse erforderlich sind.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weiterhin können alle hierin beschriebenen Merkmale der Erfindung beliebig miteinander kombiniert oder voneinander isoliert beansprucht werden, die Offenbarung ist also nicht auf explizit genannte Merkmalskombinationen beschränkt.

Weitere Einzelheiten und Vorteile der Erfindung werden anhand der in der Zeichnung dargestellten Ausführungsbeispiele näher erläutert.

Es zeigen:
- Figur 1:: die Einbausituation eines formschlüssigen Drehmomentbegrenzers mit Dämpfungsfunktion.
- Figur 2:: eine Kugelrampe eines Drehmomentbegrenzers
- Figur 3:: einen Lock-Out-Vorgang eines Drehmomentbegrenzers
- Figur 4:: das Funktionsprinzip eines Formschlussteils und einer Dämpfungsgeo metrie einer erfindungsgemäßen Vorrichtung.
- Figur 5:: einen erfindungsgemäßen Drehmomentbegrenzer in seiner Mittenposition
- Figur 6:: einen Fall, in dem ein erfindungsgemäßer Drehmomentbegrenzer ausgelöst ist
- Figur 7:: zeigt ein Dämpfungselement eines erfindungsgemäßen Drehmomentbegrenzers in einer Ausführung mit einem mechanischen Lock-Out Anzeiger.

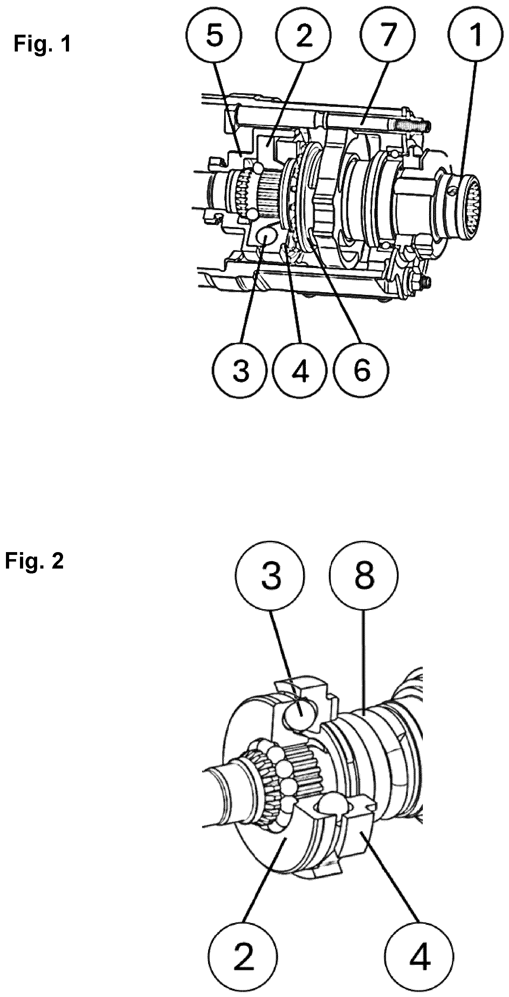

Fig. 1 zeigt die Einbausituation eines formschlüssigen Drehmomentbegrenzers mit Dämpfungsfunktion.

Im normalen, ungestörten Betrieb wird von zentralen Antriebseinheit bereitgestelltes Drehmoment von Eingangswelle (1) auf die feste Mitnahmescheibe (2) abgezweigt und über eine Kugelrampe (3) auf axial bewegliche und durch eine Druckfeder (8) vorgespannte und in Position gehaltene Mitnahmescheibe (4) auf Sonnenrad (5) in Richtung Getriebeleistungsstufe, bzw. Klappe weitergeleitet.

In einem Fehlerfall, z. B. im Falle eines blockierten Abtriebes, übersteigt eingestellter Wert für Druckfeder (8) und dabei entsteht zwischen den beiden Kurvenstücken eine Relativbewegung durch Verdrehung und daraus resultierend eine axiale Verschiebung der Mitnahmescheibe (4).

Fig. 2 zeigt eine Kugelrampe eines Drehmomentbegrenzers.

Dabei rastet die Mitnahmescheibe (4) mit Formschlusselementen in das Dämpfungselement (6) ein, der gleichzeitig mit Hilfe von Haltestiften (7) im Aktuator Gehäuse gegen Verdrehen gehalten wird. Damit wird das Drehmoment von zentralen Antriebseinheit über Aktuator Gehäuse in die Flugzeugstruktur umgeleitet und System wird angehalten.

Fig. 3 zeigt einen Lock Out Vorgang eines Drehmomentbegrenzers. So werden der Abtrieb und die Flugzeugstruktur vor Überlast verlässlich geschützt.

Fig. 4 erläutert das Funktionsprinzip eines Formschlussteils und einer Dämpfungsgeometrie einer erfindungsgemäßen Vorrichtung.

Ein formschlüssiges Dämpfungselement weist die folgenden, in Fig. 4 gezeigten, Hauptfunktionselemente auf:
- Formschlusselement (9), z.B. Klauen, Verzahnung geeigneter Art usw.
- Dämpfungssegment (10)
- Endanschlag (11)
- Lock Out Anzeiger-Rampe (12)

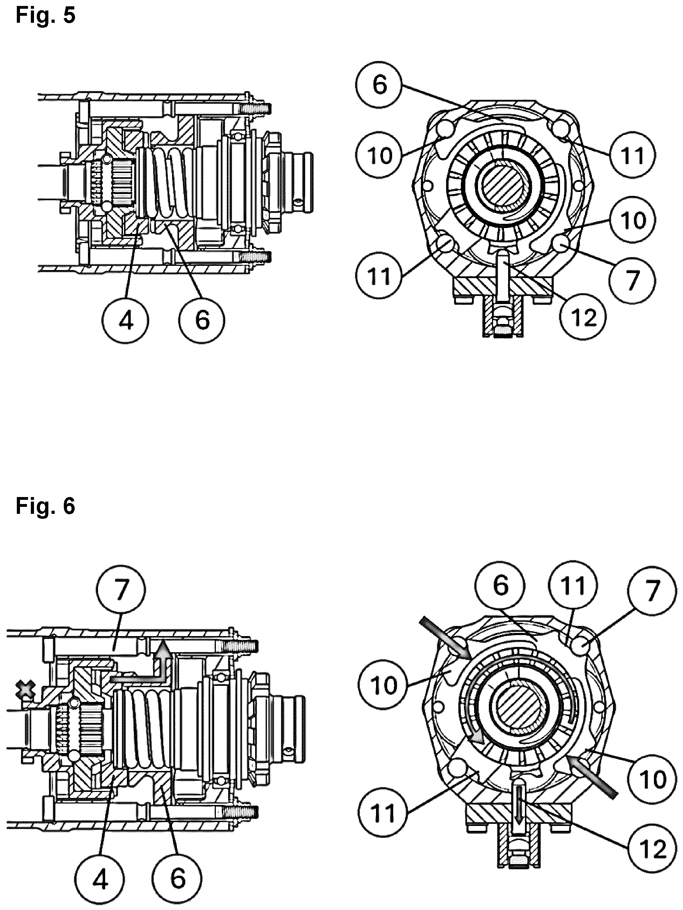

Anzahl, Teilung und Position von diesen Funktionselementen kann je nach konkreter Anforderung variieren und von der Darstellung im Fig. 4 sich unterscheiden. Im unbelasteten Zustand befindet sich formschlüssige Dämpfungselement in seiner Mittenposition, die durch Flächenkontakt zwischen 4 Haltestiften (7) und Flächen an Positionen (10) und (11) bestimmen wird, siehe Fig. 5.

Fig. 5 zeigt den Drehmomentbegrenzer in seiner Mittenposition.

Beim Einrasten der Mitnahmescheibe (4) mit Formschlusselementen in das Dämpfungselement (6) rotiert der Dämpfer um seine Rotationsachse und stoppt beim Erreichen des Endanschlages (11). Die Dämpfung wird dabei durch das Zusammendrucken der Dämpfungssegmente (10) erzielt.

Fig. 6 zeigt den Fall, in dem der Drehmomentbegrenzer ausgelöst ist.

Die radiale Kraft, die für das Zusammendrucken der Dämpfungssegmente (10) generieren muss, steigt progressiv mit der Verdrehung des Dämpfungselementes, so dass damit ein Einfahren gegen Endanschlage gebremst und verlangsamt wird. Dadurch wird die Aufprallenergie reduziert und auf die betroffenen Teile wirkendes Drehmoment massiv verkleinert.

Fig. 7 zeigt ein Dämpfungselement eines erfindungsgemäßen Drehmomentbegrenzers in einer Ausführung mit einem mechanischem Lock-Out Anzeiger.

Eine weitere Funktion des Dämpfers besteht darin, dass durch seine definierte Beweglichkeit können Geschwindigkeiten zwischen Mitnahmescheibe (4) und Dämpfungselement (6) synchronisiert werden, so dass ein Einrastvorgang von Formschlusselementen ineinander störungsfrei ermöglicht wird. Dadurch wird der Einrastvorgang definierter und Belastung die Formschlusselemente gleichmäßiger aufgeteilt, was in die höhere Tragfähigkeit der Elemente wiedergibt. Sobald die Anforderung besteht, lässt sich auch ein mechanischer Anzeiger (12) für ein Lock Out Vorgang in die Komponente integrieren, siehe Fig. 7.

## Patentansprüche

1. Vorrichtung zur Drehmomentbegrenzung und/oder -übertragung, **dadurch gekennzeichnet, dass** die Vorrichtung ein Dämpfungselement aufweist, das einteilig ausgeführt ist und das bei Überschreiten des zulässigen Drehmomentes oder beim Schalten einer Bremse eine Mitnahmescheibe des Drehmomentbegrenzers oder der Bremse mit dem Gehäuse oder einem anderen lastaufnehmenden Bauteil der Vorrichtung verbindet.

2. Vorrichtung zum rotativen Kuppeln zweier Wellen zur Übertragung von Drehmoment, **dadurch gekennzeichnet, dass** die Vorrichtung ein Dämpfungselement aufweist, das einteilig ausgeführt ist und das bei beim Schalten der Kupplung eine Mitnahmescheibe des einen Kupplungsteils mit dem Dämpfungselement des zweiten Kupplungsteils verbindet.

3. Vorrichtung gemäß Anspruch 1 oder 2, **dadurch gekennzeichnet, dass** das Dämpfungselement eine Formschluss-Scheibe für ein axiales Einkuppeln aufweist.

4. Vorrichtung gemäß einem der vorhergehenden Ansprüche, **dadurch gekennzeichnet, dass** das Dämpfungselement einen Endanschlag aufweist, welcher eine Bewegung des Dämpfungselements auf einen definierten Rotationswinkel begrenzt.

5. Vorrichtung gemäß einem der vorhergehenden Ansprüche, **dadurch gekennzeichnet, dass** das Dämpfungselement weiterhin ein Federelement aufweist, welches dazu ausgelegt ist, den Endanschlag in dessen unbelastetem Zustand in einer Mittenposition zu halten und vorzugsweise gleichzeitig eine Drehbewegung zu dämpfen und/oder eine Zentrierkraft abhängig vom Drehdrehwinkel zu erhöhen.

6. Vorrichtung gemäß einem der vorhergehenden Ansprüche, **dadurch gekennzeichnet, dass** das Dämpfungselement aus dem Vollen gefräst oder mittels eines additiven Fertigungsverfahrens gefertigt ist.

7. Vorrichtung gemäß einem der vorhergehenden Ansprüche, **dadurch gekennzeichnet, dass** das Dämpfungselement weiterhin eine Anzeige-Funktionsfläche aufweist, welche dazu ausgelegt ist, ein Verdrehen des Dämpfungselements anzuzeigen.

8. Vorrichtung gemäß einem der vorhergehenden Ansprüche, **dadurch gekennzeichnet, dass** das Dämpfungselement dazu ausgelegt ist, im Rahmen einer Kupplung eingesetzt zu werden und beim Einrücken der Kupplungsteile ein sicheres Einrastend der Formschlussteile zu gewährleisten.

9. Vorrichtung gemäß einem der vorhergehenden Ansprüche, **dadurch gekennzeichnet, dass** das Dämpfungselement in einem Statorring integriert ist oder aus diesem besteht.

10. Verfahren zur Drehmomentbegrenzung und/oder -übertragung, **dadurch gekennzeichnet, dass** die Funktion des Dämpfens und der Drehmomentbegrenzung/-übertragung von einem einzigen Bauteil, vorzugsweise einem Statorring, ausgeführt werden.

11. Bremse mit einer Vorrichtung gemäß einem der vorhergehenden Ansprüche 1 bis 9.

12. Drehmomentbegrenzer mit einer Vorrichtung gemäß einem der vorhergehenden Ansprüche 1 bis 9.

13. Verwendung einer Vorrichtung gemäß einem der vorhergehenden Ansprüche 1 bis 9 und/oder eines Verfahrens gemäß Anspruch 10 zur Steuerung eines Luftfahrzeugs oder zur Veränderung des Auftriebsverhaltens eines Luftfahrzeuges, vorzugsweise eines Flugzeugs.

14. Verwendung einer Vorrichtung gemäß einem der vorhergehenden Ansprüche 1 bis 9 und/oder eines Verfahrens gemäß Anspruch 10 in der Fertigung eines Luftfahrzeugs, vorzugsweise eines Flugzeugs.

15. Luftfahrzeug, insbesondere Flugzeug mit einer Bremse gemäß Anspruch 11 und/oder einem Drehmomentbegrenzer gemäß Anspruch 12.
